# EUROPÄISCHE PATENTANMELDUNG

(11) **EP 4 067 261 A1**
(43) Veröffentlichungstag der Anmeldung: **05.10.2022**
(21) Anmeldenummer: 22158510.2
(22) Anmeldetag: 24.02.2022
(51) Int. Cl.: B65F 1/14, B60B 37/10

(54) **BEHÄLTER**

(30) Priorität: 01.04.2021 AT 5006421 U
(71) Anmelder: Europlast Kunststoffbehälterindustrie GmbH, 9772 Dellach im Drautal (AT)
(72) Erfinder: SEIFTER, Michael, 9905 Gaimberg (AT); RESCHER, Martin, 9800 Spittal an der Drau (AT)
(74) Vertreter: Beer & Partner Patentanwälte KG

(57) **Zusammenfassung**

Ein Behälter (1) weist einen Rumpf (2), eine an dem Rumpf (2) in Lagern (7) gelagerte Achse (5) und zwei auf der Achse (5) befestigte Räder (4) auf. Die Lager (7) umfassen Körper (8), an denen innenseitig und außenseitig je eine Rippe (9 und 10) vorgesehen ist. Wenigstens eine außenseitige Rippe (10), also eine dem benachbarten Rad (4) zugewandte Rippe (10), ist als Feder ausgebildet, die an dem Schaft (6) des benachbarten Rades (4) unter elastischer Vorspannung anliegt.

## Beschreibung

Die Erfindung betrifft einen Behälter mit den Merkmalen des einleitenden Teils von Anspruch 1.

Herkömmliche Behälter (Sammelbehälter, Wertstoffsammelbehälter) bestehen nach dem Stand der Technik aus einem Rumpf aus Kunststoff, einem Deckel, einer Radachse und zwei auf die Radachse aufgesteckten Rädern, die auf der Achse beispielsweise mit Hilfe von Schnappverschlüssen gesichert sind.

Die vier Komponenten Rumpf, Lager, Radachse und Räder unterliegen Fertigungstoleranzen. Diese Fertigungstoleranzen bedingen, dass die Bauteile so ausgelegt sind, dass sie auch im schlechtesten Fall aneinandergefügt werden können. Das heißt, es muss ausreichend Fertigungsspiel (Spielanpassung) vorliegen.

Nachteilig bei Fertigungsspiel ist, dass die Komponenten relativ zueinander beweglich sind. Diese Bewegungsfreiheit wirkt sich allerdings beim Rollen der Behälter nachteilig aus, da beim Rollen durch Bewegungen der Komponenten zueinander, insbesondere durch Bewegungen der Räder in Richtung der Achse, auftretende Vibrationen Lärm verursachen.

Der Erfindung liegt die Aufgabe zugrunde, das Entstehen von Lärm beim Bewegen von Behältern der eingangs genannten Gattung zu unterbinden.

Gelöst wird diese Aufgabe erfindungsgemäß mit einem Behälter, der die Merkmale von Anspruch 1 aufweist.

Bevorzugte und vorteilhafte Ausgestaltungen des erfindungsgemäßen Behälters sind Gegenstand der Unteransprüche.

Da bei dem erfindungsgemäßen Behälter wenigstens einem der Lager eine die Räder voneinander weg belastende Feder zugeordnet ist, liegen die Komponenten Räder, Rumpf und Achse unter elastischer Vorspannung spielfrei aneinander, sodass in normalem Betrieb, also beim Rollen des Behälters über dessen Räder, keine Vibrationen entstehen und kein Lärm entsteht.

In einer bevorzugten Ausführungsform ist bei dem erfindungsgemäßen Behälter vorgesehen, wenigstens eine der Rippen, zwischen welchen der Körper des Lagers, in welchem die Achse der Räder gelagert ist, angeordnet ist, als Feder auszubilden, um die gewünschte Vorspannung, welche Vibrationen unterbindet, zu erreichen. Diese Ausführungsform hat den Vorteil, dass eine gesonderte Feder - also ein zu den oben genannten, wesentlichen Komponenten des Behälters zusätzlicher Bauteil - entbehrlich ist.

In einer bevorzugten Ausführungsform ist die dem Rad benachbarte, außenseitige Rippe des Lagers in ihrem die Feder bildenden Bereich S-förmig ausgebildet. Bei dieser Ausführungsform ist bevorzugt vorgesehen, dass die Öffnung, durch welche die die Räder tragende Achse geführt ist, in dem S-förmigen Bereich der außenseitigen Rippe vorgesehen ist.

Wenngleich bei dem erfindungsgemäßen Behälter grundsätzlich eine einzige Feder genügt, ist es bevorzugt, dass, um die Wirkung der erfindungsgemäß vorgesehenen Feder zu verstärken, beiden Rädern Federn zugeordnet sind.

In der bevorzugten Ausführungsform ist bei der Erfindung beispielsweise vorgesehen, dass beide außenseitigen, den Rädern benachbarten, Rippen der Lager vom Körper des Lagers bereichsweise Abstand aufweisen und elastisch verformbar sind, wobei die Abstand aufweisenden Bereiche der Rippen die Federn sind.

Auch wenn zwei als Feder wirkende Rippen vorgesehen sind, sodass jedem der beiden Räder eine Feder zugeordnet ist, können diese Rippen S-förmig ausgebildet sein.

Die erfindungsgemäße Ausführung des Sammelbehälters erlaubt es, diesen so auszubilden, dass der Körper des Lagers und die beiden Rippen, die zwischen sich den Körper des Lagers aufnehmen, mit dem Rumpf des Behälters einstückig, beispielsweise im Spritzgussverfahren, hergestellt sind.

Weitere Einzelheiten und Merkmale der Erfindung ergeben sich aus der nachstehenden Beschreibung des in den Zeichnungen gezeigten Ausführungsbeispiels. Es zeigt:
- Fig. 1: in Ansicht einen erfindungsgemäßen Behälter in Form eines Sammelbehälters von hinten,
- Fig. 2: eine Ansicht des Behälters von der Seite,
- Fig. 3: eine Einzelheit des Sammelbehälters im Bereich eines der beiden Lager mit Achse und Schaft eines der Räder, und
- Fig. 4: in Schrägansicht ein Lager mit Lagerkörper und zwei seitliche, neben diesem angeordneten Rippen.

Ein erfindungsgemäßer Behälter 1, der ein Sammelbehälter, insbesondere ein Wertstoffsammelbehälter, sein kann, besitzt einen Rumpf 2, der beispielsweise aus Kunststoff gefertigt ist, an dessen Oberseite ein klappbarer Deckel 3 angeordnet ist.

Im Bereich des unteren Endes des Rumpfes 2 des Behälters 1 sind zwei Räder 4 vorgesehen, die auf einer Achse 5 angeordnet und auf dieser, insbesondere mit Hilfe eines Schnappverschlusses, festgelegt sind. Die Achse 5, welche die Räder 4 trägt, ist an dem Behälter 1 in zwei Lagern 7 drehbar aufgenommen.

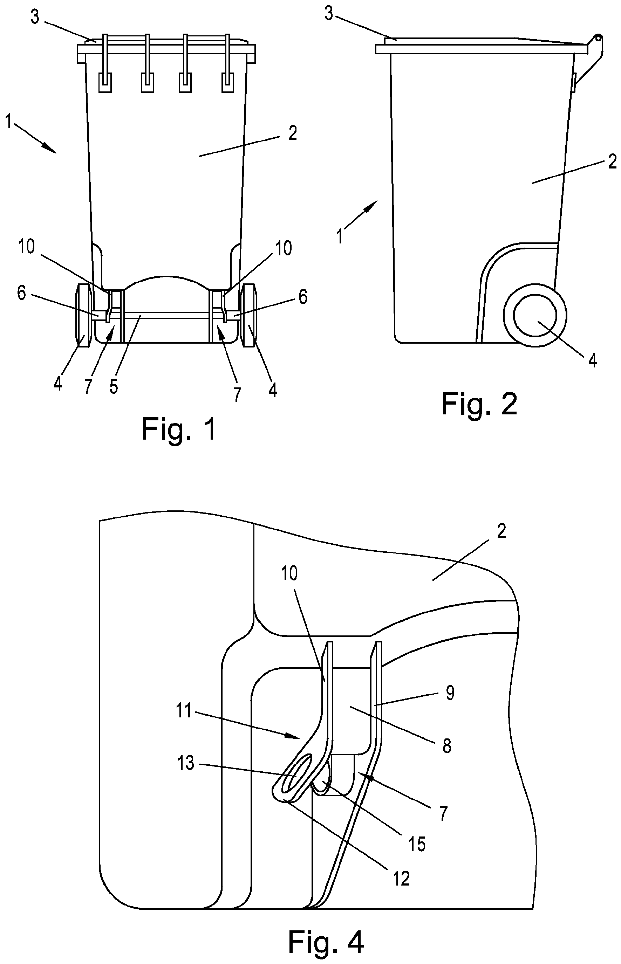

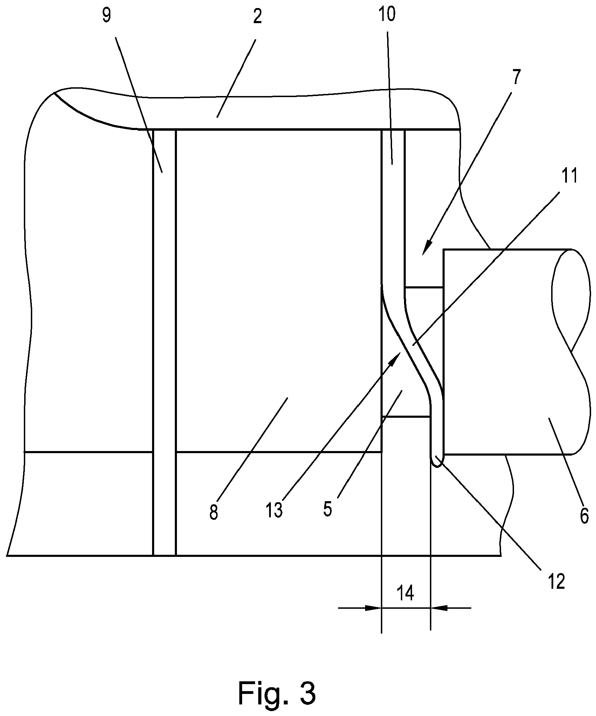

Jedes Lager 7 besteht, wie dies insbesondere die Fig. 3 und 4 zeigen, aus einem Körper 8, in dem eine Öffnung 15 vorgesehen ist, in der die Achse 5 drehbar aufgenommen ist. An den Seiten des Körpers 8 des Lagers 7 sind Rippen 9 und 10 vorgesehen. Die innenseitige Rippe 9 ist mit dem Körper 8 des Lagers 7 einstückig ausgebildet. Die innenseitige Rippe 9 ist zur Gänze und die außenseitige Rippe 10 ist teilweise mit dem Rumpf 2 des Behälters 1 einstückig, beispielsweise im Spritzgussverfahren hergestellt, ausgeführt.

Die innenseitige Rippe 9 ist im Wesentlichen eben ausgebildet und liegt an ihrer ganzen dem Körper 8 des Lagers zugekehrten Seite an dem Körper 8 an.

Die außenseitigen Rippen 10, also die den Rädern 4 benachbarten Rippen 10 der Lager 7, sind als Federn ausgebildet.

Hierzu besitzt jede der außenseitigen Rippen 10 einen Bereich 11, in dem sie von dem Körper 8 des Lagers 7, insbesondere dem Bereich des Körpers 8 des Lagers 7, in dem das Loch für die Achse 5 vorgesehen ist, Abstand 14 aufweist und mit dem Rumpf 2 nicht verbunden ist.

Wie insbesondere die Fig. 3 und 4 zeigen, sind die außenseitigen Rippen 10 in ihrem Bereich 11 im Wesentlichen flach S-förmig ausgeführt, wobei die freien Enden 12 der Abstand 14 aufweisenden, außenseitigen Rippen 10 im Wesentlichen senkrecht zur Achse 5, welche die Räder trägt 4, ausgerichtet sind.

Aus Fig. 3 ist ersichtlich, dass das freie, zur Achse 5 im Wesentlichen senkrecht ausgerichtete Ende 12 der außenseitigen Rippe 10 unter elastischer Verformung an dem Schaft 6 des Rades 4 anliegt.

In der in Fig. 3 gezeigten Stellung ist die außenseitige Rippe 10 in ihrem vom Körper 8 der Lager 7 Abstand 14 aufweisenden Bereich 11 im Vergleich zu ihrer entlasteten Stellung (Fig. 4) zu dem Körper 8 hin elastisch verformt, sodass sie unter Vorspannung steht und auf der ihr zugekehrten Fläche des Schaftes 6 des Rades anliegt.

So ist sichergestellt, dass die Räder 4 unter elastischer Vorspannung nach außen hin belastet sind. Wenn nur eine außenliegende Rippe 10 als Feder ausgebildet ist, liegt das gegenüberliegende Rad 4 mit seinem Schaft 6 an dem Lager 7, dessen außenliegende Rippe 10 nicht als Feder ausgebildet ist, an. So ist erreicht, dass beim Verschieben des Behälters 1 durch die Räder 4 keine Vibrationen, insbesondere keine in Richtung der Achse 5 ausgerichteten Bewegungen der Räder 4, entstehen (beispielsweise würden sonst die Schäfte 6 der Räder 4 an den Lagern 7 anschlagen), sodass unerwünschte Lärmentwicklung beim Bewegen des Behälters 1 unterbunden ist.

Wenngleich im gezeigten Ausführungsbeispiel (vgl. Fig. 1) zwei Federn in Form von bereichsweise S-förmig ausgebildeten, außenseitigen Rippen 10 der Lager 7 vorgesehen sind, genügt im Prinzip eine einzige Feder, die entweder dem rechten oder dem linken Rad 4 zugeordnet ist.

Die Feder muss auch nicht unbedingt ein Teil der Lager 7 der Achse 5 für die Räder 4 sein, sondern es kann auch wenigstens ein gesonderter Teil, wie eine Schraubenfeder, vorgesehen sein, um die Räder 4, insbesondere die Schäfte 6 der Räder 4, in Abstand von den Lagern 7 bzw. in Anlage an die Lager 7 zu halten.

Zusammenfassend kann ein Ausführungsbeispiel der Erfindung wie folgt beschrieben werden:
Ein Behälter 1 weist einen Rumpf 2, eine an dem Rumpf 2 in Lagern 7 gelagerte Achse 5 und zwei auf der Achse 5 befestigte Räder 4 auf. Die Lager 7 umfassen Körper 8, an denen innenseitig und außenseitig je eine Rippe 9 und 10 vorgesehen ist. Wenigstens eine außenseitige Rippe 10, also eine dem benachbarten Rad 4 zugewandte Rippe 10, ist als Feder ausgebildet, die an dem Schaft 6 des benachbarten Rades 4 unter elastischer Vorspannung anliegt.

## Patentansprüche

1. Behälter (1), insbesondere Sammelbehälter oder Wertstoffsammelbehälter, umfassend einen Rumpf (2), vorzugsweise aus Kunststoff, eine an dem Rumpf (2) in Lagern (7) gelagerte Achse (5) und zwei auf der Achse (5) befestigte Räder (4), wobei jedes Lager (7) einen Körper (8) aufweist, der zwischen zwei von dem Rumpf (2) des Behälters (1) abstehenden Rippen (9, 10) angeordnet ist, **dadurch gekennzeichnet, dass** wenigstens einem der Lager (7) eine die Räder (4) voneinander weg belastende Feder zugeordnet ist.

2. Behälter nach Anspruch 1, **dadurch gekennzeichnet, dass** die Feder zwischen dem Körper (8) des Lagers (7) und einem der Räder (4), insbesondere dem Schaft (6) des Rades (4), angeordnet ist.

3. Behälter nach Anspruch 1 oder 2, **dadurch gekennzeichnet, dass** die Achse (5) durch eine Öffnung (13), die in der Feder vorgesehen ist, geführt ist.

4. Behälter nach einem der Ansprüche 1 bis 3, **dadurch gekennzeichnet, dass** die einem Rad (4) benachbarte, außenseitige Rippe (10) bereichsweise von dem Körper (8) des Lagers (7) Abstand (14) aufweist und elastisch verformbar ist, wobei der Abstand (14) aufweisende Bereich (11) der Rippe (10) die Feder ist.

5. Behälter nach Anspruch 4, **dadurch gekennzeichnet, dass** die dem Rad (4) benachbarte, außenseitige Rippe (10) in ihrem die Feder bildenden Bereich (11) S-förmig ausgebildet ist.

6. Behälter nach Anspruch 5, **dadurch gekennzeichnet, dass** die Öffnung (13) in der außenseitigen Rippe (10), durch welche die die Räder (4) tragende Achse (5) geführt ist, in dem S-förmigen Bereich (11) der außenseitigen Rippe (10) vorgesehen ist.

7. Behälter nach einem der Ansprüche 4 bis 6, **dadurch gekennzeichnet, dass** das freie Ende (12) des von dem Körper (8) des Lagers (8) Abstand aufweisenden Bereiches (11) der außenseitigen Rippe (10) an dem Schaft des Rades anliegt.

8. Behälter nach Anspruch 7, **dadurch gekennzeichnet, dass** das an dem Schaft (6) des Rades (4) anliegende, freie Ende (12) der außenseitigen Rippe (10) im Wesentlichen senkrecht zur Achse (5) ausgerichtet ist.

9. Behälter nach einem der Anspruche 1 bis 8, **dadurch gekennzeichnet, dass** beiden Rädern (4) Federn zugeordnet sind.

10. Behälter nach Anspruch 9, **dadurch gekennzeichnet, dass** beide außenseitigen, den Rädern (4) benachbarten Rippen (10) von den Körpern (8) der Lager (7) bereichsweise Abstand (14) aufweisen und elastisch verformbar sind, wobei die Abstand (14) aufweisenden Bereiche (11) der Rippen (10) die Federn sind.

11. Behälter nach einem der Ansprüche 4 bis 10, **dadurch gekennzeichnet, dass** die außenseitige Rippe (10) und die innenseitige Rippe (9), zwischen welchen der Körper (8) des Lagers (7) angeordnet ist, mit dem Rumpf (2) des Behälters (1) einteilig ausgebildet sind und dass die außenseitige Rippe (10) in ihrem Abstand (14) aufweisenden Bereich (11) von dem Rumpf (2) des Behälters (1) Abstand hat.
